# EUROPEAN PATENT APPLICATION

(11) **EP 3 975 035 A1**
(43) Date of publication of application: **30.03.2022**
(21) Application number: 20197806.1
(22) Date of filing: 23.09.2020
(51) Int. Cl.: G06K 9/00, G06K 9/62

(54) **METHOD AND SYSTEM FOR ROAD SAFETY ASSESSMENT**

(71) Applicant: Valeo Internal Automotive Software Egypt, a limited liability company, Giza, Cairo (EG); Cairo University, Orman, Giza 12613 (EG)
(72) Inventor: ERAQI, Hesham, Giza, Cairo (EG); ABDELGAWAD, Hossam, Orman, Giza 12613 (EG); SAID, Dalia, Orman, Giza 12613 (EG)
(74) Representative: Hofstetter, Schurack & Partner

(57) **Abstract**

According to a method for road safety assessment, image data (7) representing a road segment (5) is received by a computing unit (3). A set of bounding boxes (14) is determined by the computing unit (3) based on the image data (7), each bounding box (14) representing an object (6a, 6b), wherein for each of the bounding boxes (14) a set of two orientation descriptors (21b) specifying a two-dimensional orientation of the respective bounding box (14) is determined. A respective object class is determined for each of the objects (6a, 6b) represented by the set of bounding boxes and at least one safety indicator (15) is computed for the road segment (5) by the computing unit (3) depending on the determined object classes.

## Description

The present invention is directed to a method for road safety assessment, to a road safety assessment system for a motor vehicle, to a motor vehicle and to computer program product.

Roadway safety estimation is an important factor to enable autonomous driving and advanced driver assistance features. Different road features, for example traffic signs, lane markings, barriers, lighting infrastructure, road separation, et cetera, may have a direct effect on safety. In this context, data collection is essential and extensive information of existing road features must be collected and analyzed in order to identify and quantify road features and their effect on safety. Conventionally, the process of road surveying, data collection and analysis is manual and very complex, thus resulting in high costs and time effort, in particular considering that the process should be carried out periodically in order to provide up to date estimations.

The results of the road safety assessment may be used for different purposes, such as a safer routing or path planning, an automatic or semiautomatic control of vehicles of driver assistance functions. Furthermore, the gathered information may be used for statistical purposes or as a basis for authorities and other decision makers to coordinate road safety improvement measures.

Document US 2018/032082 A1 describes a machine learning navigational engine with imposed constraints to navigate an autonomous vehicle using reinforcement learning techniques. Therein, navigational constraints, concerning for example other vehicles, pedestrians, stationary objects et cetera, are taken into account.

In this way, however, an overall objective assessment of the safety of a given road segment, however, not possible.

It is also known to use artificial neural networks for the purpose of automatic object detection. In the publication by J. Redmon et al., "You Only Look Once: Unified, Real-Time Object Detection", arXiv:1506.02640v5, an object detection algorithm denoted as YOLO is described. The algorithm is based on a convolutional neural network architecture, CNN.

One drawback of this approach to object detection algorithm is that it cannot predict the orientation of objects since it determines only rectangular bounding boxes with sides parallel to the horizontal and vertical direction, respectively. It is known, however, that oriented objects, such as curbs, lane markings et cetera, have a significant impact on road safety. By using the YOLO detector, unfortunately only a reduced accuracy for detecting oriented objects is achievable.

The publication by B. Shi et al., "Detecting Orientated Text in Natural Images by Linking Segments", arXiv:1703.06520v3, describes an object detection method for detecting oriented text in camera images, which is also based on a CNN model. To this end, rectangular bounding boxes are characterized by a single orientation parameter, namely the corresponding orientation angle.

This approach, however, suffers from a discontinuity problem since a rectangular bounding box with a given orientation angle is almost identical to a bounding box with an orientation angle shifted by slightly less than 180°, while the orientation angle formally differs greatly in both cases. This results in a reduced accuracy for detecting orientated but undirected objects, such as curbs or lane markings.

It is therefore an object of the present invention to provide an improved concept for automatic road safety assessment allowing for a higher accuracy or reliability.

This object is achieved by the respective subject-matter of the independent claims. Further implementations and preferred embodiments are subject-matter of the dependent claims.

The improved concept is based on the idea to carry out an object detection algorithm based on image data in order to determine bounding boxes and corresponding object classes, wherein each bounding box is specified by two orientation descriptors.

According to the improved concept, a method for road safety assessment, in particular an at least in part computer-implemented method for road safety assessment, is provided. The method comprises receiving image data, in particular two-dimensional image data, representing a road segment by a computing unit. A set of bounding boxes is determined by the computing unit based on the image data, wherein each bounding box of the set of bounding boxes represents an object, in particular an object in the image data or in an image defined by the image data. Therein, for each of the bounding boxes, a set of two orientation descriptors specifying a two-dimensional orientation of the respective bounding box, in particular a two-dimensional orientation of the respective bounding box within an image plane of the image data or the image, is determined by the computing unit. A respective object class is determined by the computing unit for each of the objects represented by the set of bounding boxes and at least one safety indicator for the road segment is computed by the computing unit depending on the determined object classes.

The image data may for example be generated by an environmental sensor system, such as a camera or a lidar system, in particular of a motor vehicle. The image data may define one or more two-dimensional images, in particular camera images. The orientation of a bounding box may for example be understood to correspond to the inclination of a side of the respective bounding box with respect to a reference line, for example a horizontal line or any other reference line, within the image plane, without considering a direction of the bounding box. In other words, while the orientation in combination with a direction is uniquely described by an angle between 0° and 360°, the orientation alone is invariant under an angle shift of 180°. In other words, a bounding box including an angle of orientation of 45° with the horizontal is identical to a bounding box including an angle of 225° with the horizontal. In contrast, an arrow including an angle of 45° with the horizontal line is usually considered to point to the top right, while in this convention an arrow including 225° with the horizontal line points to the bottom left, since the arrow is not only oriented but also directed in contrast to the bounding box.

Each bounding box is fully defined by a set of descriptors including the set of two orientation descriptors. Apart from the orientation descriptors, further descriptors of a bounding box may correspond to a two-dimensional position of a defined point, for example a center point or corner point, of the bounding box. In particular, in case of a rectangular bounding box, the further descriptors may also comprise corresponding side lengths of the rectangle. In other implementations, instead of describing a bounding box by means of the position of the characteristic point and the side lengths, the bounding box may be described by respective offsets from the location or side lengths of a predefined anchor box.

An anchor box corresponds to one of a plurality of predefined typical bounding boxes expected in the actual context. For example, the image may be divided into a plurality of cells and for each of the cells, a corresponding set of anchor boxes may be predefined. In particular, in case of rectangular anchor boxes, for each anchor box a two-dimensional position of its center point or another characteristic point as well as the two side lengths, which may be denoted as lengths and widths, respectively, are defined. In order to determine a bounding box, respective offsets from the location and side lengths of one of the anchor boxes may be determined.

A safety indicator of the at least one safety indicator is given by a numerical value computed by the computing unit. Depending on the actual meaning of a safety indicator, it may be binary or, in other words, assume one of two predefined values, or it may assume one of a plurality or even of a quasi-continuous range of predefined values. For example, the safety indicator may specify, whether a specific object class has been identified according to the image data or not. In this case, the safety indicator may assume only two values. This may for example be the case for a safety indicator indicating the presence of a road separation, lighting infrastructure or lane markings et cetera. On the other hand, a safety indicator may also depend on the number or a density or another quality of certain object classes identified based on the image data or on a combination of different object classes identified. In this case, the safety indicator may assume one of a plurality of values corresponding to respective levels, for example, in the case the safety indicator represents a traffic density et cetera.

By means of a method for road safety assessment according to the improved concept, the safety indicators, which give a direct measure for the safety of the road segment, may be determined in a fully automatic manner. To this end, the environmental sensor system and the computing unit may be contained by a motor vehicle, wherein a field of view of the environmental sensor system covers the road segment at least in part. The bounding boxes and the object classes may be determined automatically by applying a corresponding object detection algorithm and also the safety indicators may be determined automatically by the computing unit.

By taking into account the orientation descriptors for determining the bounding boxes, a high accuracy for detecting and classifying oriented objects in the image data is achieved. In particular, if the orientation of the bounding box would not be considered, or, in other words, only bounding boxes with a constant orientation, for example horizontally oriented bounding boxes, apart from an oriented object also a significant amount of background information would be covered, which is not only irrelevant for the object classification but may also impair the accuracy of the object classification and also of the definition of the respective bounding box itself. Therefore, the accuracy of the bounding boxes, the object classes and, consequently, the safety indicators, is increased by incorporating the orientation.

By taking into account the two orientation descriptors instead of a single orientation descriptor, such as the orientation angle, it is accounted for by the fact that oriented objects influencing road safety include undirected oriented objects, such as curbs, lane markings, lane separations et cetera. On the other hand, directed oriented objects do not play an important role in this context. In principle, a single orientation angle, that is a single orientation descriptor, is sufficient to fix the orientation of a rectangular bounding box. However, for a computational implementation of the bounding box prediction, it is a disadvantage that two orientation angles differing by 180° result in the same orientation for the rectangular bounding box. By considering two orientation descriptors as in the improved concept, this degeneracy of different orientation angles may be lifted. At the same time, by using two different orientation descriptors, a possible ambiguity of one of the orientation descriptors regarding the resulting orientation of the rectangular bounding box may be cured with the help of the remaining orientation descriptor. In consequence, more accurate rectangular bounding boxes may be determined, which also improves the accuracy for determining the respective object class and, as a consequence, the accuracy of the at least one safety indicator.

According to several implementations of the method for road safety assessment, the computing unit is comprised by a motor vehicle and the motor vehicle comprises the environmental sensor system, for example a camera system, configured to generate the image data and provide the image data to the computing unit.

In this way, the method may be carried out during normal use of the motor vehicle. Consequently, a large amount of data may be collected, the method may be carried out for a large number of road segments and the method may also be repeated when the motor vehicle is driving along the road segments repeatedly.

According to several implementations, each of the bounding boxes corresponds to a rectangular bounding box.

According to several implementations, the set of two orientation descriptors for a given bounding box is invariant with respect to a rotation of the respective bounding box by a rotation angle of 180° around a center of the respective bounding box.

In other words, the two orientation descriptors do not specify a direction, since the values of the orientation descriptors are the same for a given orientation angle θ and for (θ + 180°).

Therefore, more accurate bounding boxes for oriented undirected objects may be determined, which in turn improves the accuracy or confidence for determining the respective object classes and the at least one safety indicator, respectively.

According to several implementations, for each of the bounding boxes, a first orientation descriptor of the set of two orientation descriptors given by sin(2θ) is determined by the computing unit, wherein the θ corresponds to the orientation angle of the respective bounding box with respect to a predefined reference line, for example, with respect to a horizontal line in the image plane.

In other words, the set of two orientation descriptors comprise a first orientation descriptor given by sin(2θ). That means, the orientation descriptor is equal to sin(2θ) or proportional to sin(2θ).

According to several implementations, for each of the bounding boxes, a second orientation descriptor of the set of two orientation descriptors given by cos(2θ) is determined by the computing unit. In other words, the set of two orientation descriptors comprises the second orientation descriptor given by cos(2θ).

In other words, the set of two orientation descriptors comprise a second orientation descriptor given by cos(2θ). That means, the orientation descriptor is equal to cos(2θ) or proportional to cos(2θ).

In particular, the orientation angle corresponds to an angle, a predefined side of the respective bounding box includes with the reference line, for example the longer side or the shorter side of the rectangle describing the bounding box.

Since the value of 2θ ranges from 0 to 360° for θ ranging from 0 to 180°, the first orientation descriptor is invariant with respect to a shift of θ by 180°. Since sin(2θ) is a continuous function, the first orientation descriptor has similar values for bounding boxes with orientations differing by slightly less or slightly more than 180°. For example, considering a bounding box with an orientation of 0° and a bounding box with an orientation of 179°, the respective values of sin(2θ) differ by approximately 0.03, which corresponds to less than 2% of the overall range of values for 2θ. In comparison, the value of θ itself differs by 179°, which corresponds to nearly 50% of the total range of values for θ. Consequently, by using sin(2θ) as the first orientation descriptor, the problem of discontinuity for oriented undirected objects or bounding boxes, respectively, is solved. The same holds analogously for cos(2θ).

According to several implementations, the set of two orientation descriptors consists of the first orientation descriptor given by the sin(2θ) and the second orientation descriptor given by cos(2θ).

Since sin(2θ) is symmetric with respect to the orientation angles 45° and 135°, respectively, while cos(2θ) is symmetric with respect to 90°, the combination of sin(2θ) and cos(2θ) allows for a unique definition of the orientation of the bounding box.

According to several implementations, the at least one safety indicator is computed by the computing unit depending on the determined object classes and depending on the determined bounding boxes, in particular the descriptors of the bounding boxes.

According to several implementations, the at least one safety indicator is computed by the computing unit depending on the determined object classes and depending on the determined set of two orientation descriptors.

By computing the at least one safety indicator depending on the object classes, the descriptors of the bounding boxes and, in particular, the orientation descriptors have an indirect influence on the at least one safety indicators. However, by explicitly taking into account the bounding boxes, in other words, the descriptors of the bounding boxes, the orientation descriptors and/or the further descriptors, for computing the at least one safety indicator, said quantities are also considered directly. This may further increase accuracy of the at least safety indicator since not only the determined object classes and the number of the respectively determined objects of that object classes, but also their size, location and/or orientation may directly influence their relevance for road safety.

According to several implementations, a safety score representing an overall risk for a road accident on the road segment is computed by the computing unit depending on the at least one safety indicators.

In particular, the at least safety indicator comprises a plurality of two or more, preferably three or more, safety indicators and the safety score is computed depending on all safety indicators of the plurality.

The safety score represents an objective and generic measure to represent the overall risk for the road accident. Therefore, it becomes easier to compare the safety of different road segments, different roads or different areas to each other.

The at least one safety indicator and/or the safety score may, in particular, be computed by the computing unit based on a set of predefined rules stored, for example, in a road safety knowledge database. The database may be set up based on empirical studies and/or models, which associate the presence and distribution of object classes and their respective properties of the objects given by the bounding boxes to the at least one safety indicator and/or associate the safety indicators to an overall safety score or risk of the road accident.

According to several implementations, a route for the motor vehicle is planned, in particular automatically planned, by the computing unit depending on the at least one safety indicator and/or depending on the safety score.

This makes it possible for the computing unit to navigate according to safer routes. In particular, while conventional navigation systems may select the shortest or fastest route, by means of taking into account the safety indicators and/or the safety score, the navigation may, alternatively or in addition, favor safer routes or chose safer routes with a higher probability.

According to several implementations, an autonomous driving mode of the motor vehicle is automatically enabled or disabled by the computing unit depending on the at least one safety indicator and/or depending on the safety score.

The autonomous driving mode may for example implement a driving mode according to level 5 of the classification given by the standard SAE J3016 in the version dated June 2018. In this way, the computing unit may, for example, disable the autonomous driving mode in case the at least one safety indicator and/or the safety score indicate that autonomous driving is not possible or not possible in a sufficiently safe manner for the given road segment. In consequence, road accidents while autonomous driving may be avoided.

According to several implementations, a driver assistance function, in particular an advanced driver assistance system, ADAS, of the motor vehicle is, in particular automatically, enabled or disabled by the computing unit depending on the at least one safety indicator and/or depending on the safety score.

The driver assistance function may, for example, implement a function according to one of levels 1 to 4 of the SAE J3016 classification. Analog advantages as described with respect to the automatic enabling or disabling of the autonomous driving mode apply.

Alternatively or in addition to the described applications, the at least one safety indicator and/or the safety score may also be used for different purposes, for example for statistical evaluation of the overall safety of a road network or in order to identify particularly safe or unsafe road segments.

In addition to the at least one safety indicator and/or the safety score, the computing unit may also receive further information via vehicle-to-vehicle, V2V, and/or via vehicle-to-infrastructure, V2I, communication et cetera. The further information may for example comprise at least one further safety indicator and/or at least one further safety score generated by respective further motor vehicles or infrastructure systems.

In this way, the confidence level regarding the planning of the route, enabling or disabling the autonomous driving mode or enabling or disabling the driver assistance function may be increased. In the same way, the confidence for statistical road safety evaluations may be increased.

According to several implementations, an object detection algorithm is carried out by the computing unit using the image data as an input to the object detection algorithm for determining the set of bounding boxes and the respective object classes.

According to several implementations, the object detection algorithm is based on a trained artificial neural network, in particular a convolutional neural network, CNN.

Artificial neural networks, in particular CNNs, have proven to represent powerful tools for object detection and allow to implement the improved concept, in particular using the orientation descriptors as described, in a particular efficient way. Consequently, high accuracy for the classification, for determining the bounding boxes and, consequently, for the at least one safety indicator and/or the safety score, are achieved.

The object detection algorithm may for example be designed as a one-stage detector, wherein the input images corresponding to the image data are divided into cells of a predefined grid and the object detection algorithm determines if there is an object or not for each of the cells. In case an object is found in a cell, the object detection algorithm may determine the respective object class and the corresponding bounding box.

According to several implementations, a feature map is generated by the computing unit as an output of the neural network, wherein the feature map comprises the respective sets of orientation descriptors for at least a fraction of the bounding boxes.

Therein, the feature map may be a final output or an intermediate output of the neural network. In particular, the computing unit may generate two or more feature maps as different outputs according to different levels or depths of the neural network, wherein each of the feature maps comprises the respective sets of orientation descriptors for at least a corresponding fraction of the bounding boxes.

By taking into account different feature maps from different depths of the neural network, an increased accuracy is achieved for small objects as well as for large objects.

According to several implementations, for each of the bounding boxes, the set of two orientation descriptors is decoded by the computing unit, in particular by a decoder unit of the computing unit.

The decoder unit may be understood as a software module implemented in the computing unit, for example, as a part of the object detection algorithm. By decoding the orientation descriptors, the computing unit may, in particular, compute a corresponding orientation angle from the orientation descriptors. The at least one safety indicator may then be computed by the computing unit depending on the decoded orientation descriptors or the orientation angle, respectively. Therein, the orientation angle may for example be restricted to a range of 180°. In this way, existing predefined rules for associating the road features represented by the objects or the bounding boxes, respectively, may be applied more directly to compute the at least one safety indicator.

According to several implementations, the set of bounding boxes is filtered by the computing unit to exclude duplicate bounding boxes representing the same object. The at least one safety indicator is then computed depending on the object classes of the respectively filtered bounding boxes and/or depending on the filtered bounding boxes.

The filtering may for example include applying a non-maximum suppression algorithm.

According to several implementations, the at least one safety indicator is computed by a first-order logic inference engine, FOL-engine, implemented on the computing unit. Therein, the FOL-engine may be considered as a software module of the computing unit, for example.

FOL-engines represent reliable tools for a rule-based prediction of the at least one safety indicator. To this end, the computing unit may, for example, read a knowledge base for roadway safety indicators to estimate the at least one safety indicator based on the object classes and/or the bounding boxes.

According to several implementations, the at least one safety indicator comprises one or more of the following: an indicator, characterizing a traffic density of the road segment, an indicator characterizing the presence of a road separation on the road segment, an indicator characterizing the presence of road markings on the road segment, an indicator characterizing the presence of traffic signs or specific types of traffic signs on the road segments.

According to several implementations, the at least one safety indicator comprises an indicator characterizing an environment of the road segment, for example characterizing an area type of the environment such as for example rural or urban, a degree of land use of the environment and/or the presence of obstacles in the environment of the road segment.

According to several implementations, the at least one safety indicator comprises an indicator characterizing a lighting infrastructure, in particular the presence and/or type of light poles or streetlights, on the road segment.

According to several implementations, the at least one safety indicator comprises an indicator characterizing the presence of obstacles on the road segment and/or an indicator characterizing the presence of a predefined type of vehicles on the road segment on a density of such vehicles.

It has been found that said indicators have, alone or in combination, a significant influence on the road safety and therefore represent particularly valuable safety indicators.

According to the improved concept, also a road safety assessment system for a motor vehicle is provided. The road safety assessment system comprises computing unit, which is configured to receive image data representing a road segment in an environment of the motor vehicle from an environmental sensor system of the motor vehicle. The computing unit is configured to determine a set of bounding boxes based on the image data, each bounding box representing an object, wherein for each of the bounding boxes a set of two orientation descriptors specifying a two-dimensional orientation of the respective bounding box within an image plane of the image data is determined. The computing unit is configured to determine a respective object class for each of the objects represented by the set of bounding boxes and to compute at least one safety indicator for the road segment depending on the determined object classes.

For example, the road safety assessment system may be part of an electronic vehicle guidance system of the vehicle or may comprise an electronic vehicle guidance system of the vehicle.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification.

According to several implementations of the road safety assessment system, the road safety assessment system comprises the environmental sensor system, for example implemented as a camera system, which is configured to generate the image data. In particular, the camera system comprises a front camera of the motor vehicle.

Further implementations of the road safety assessment system according to the improved concept follow directly from the various implementations of the method according to the improved concept and vice versa. In particular, a road safety assessment system according to the improved concept may be configured to or programmed to carry out a method according to the improved concept or the road safety assessment system carries out such a method.

According to the improved concept, also a motor vehicle comprising a road safety assessment system according to the improved concept is provided.

According to the improved concept, also a computer program comprising instructions is provided. When the instructions or the computer program, respectively, are executed by a computer system, in particular by a road safety assessment system according to the improved concept, for example by the computing unit of the road safety assessment system, the instructions cause the computer system to carry out a method according to the improved concept.

According to the improved concept, also a computer-readable storage medium storing a computer program according to the improved concept is provided.

The computer program as well as the computer-readable storage medium may be considered as respective computer program products comprising the instructions.

Further features of the invention are apparent from the claims, the figures and the description of figures. The features and feature combinations mentioned above in the description as well as the features and feature combinations mentioned below in the description of figures and/or shown in the figures alone may not only be encompassed by the improved concept in the respectively specified combination, but also in other combinations. Thus, implementations of the improved concept are encompassed and disclosed, which may not explicitly be shown in the figures or explained, but arise from and can be generated by separated feature combinations from the explained implementations. Implementations and feature combinations, which do not have all features of an originally formulated claim, may be encompassed by the improved concept. Moreover, implementations and feature combinations, which extend beyond or deviate from the feature combinations set out in the relations of the claims, may be encompassed by the improved concept.

In the figures:
- Fig. 1: shows schematically a motor vehicle with an exemplary implementation of a road safety assessment system according to the improved concept;
- Fig. 2: shows a flow diagram of an exemplary method for road safety assessment according to the improved concept;
- Fig. 3a: shows schematically a map with a representation of a safety indicator;
- Fig. 3b: shows schematically a map with a representation of a further safety indicator;
- Fig. 4: shows schematically a flow diagram of a further exemplary implementation of a method according to the improved concept; and
- Fig. 5: shows schematically different possibilities for encoding the orientation of bounding boxes.

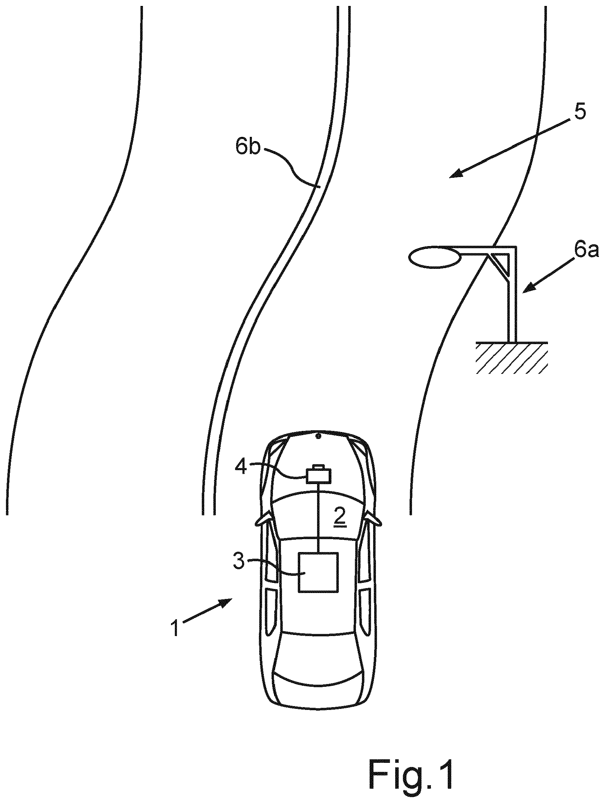

Fig. 1 shows schematically an exemplary implementation of a motor vehicle 1 according to the improved concept driving on a road, wherein a road segment 5 is located in front of the vehicle 1. Different objects may be present in the environment of the vehicle 1 or the road segment 5, respectively, for example a light pole 6a or a road separation 6b.

The vehicle 1 comprises an exemplary implementation of a road safety assessment system 2 according to the improved concept. The road safety assessment system 2 comprises a computing unit 3, which is coupled to a camera 4, for example a front camera, of the vehicle 1 or of the road safety assessment system 2.

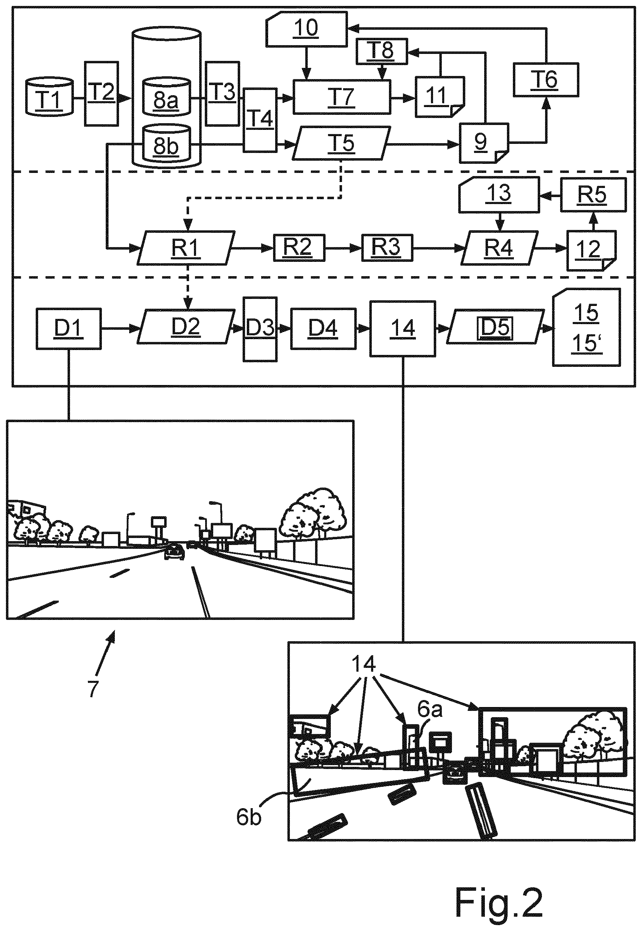

The function of the road safety assessment system 2 is described in more detail in the following with respect to exemplary implementations of a method for road safety assessment according to the improved concept, in particular with reference to Fig. 2 to Fig. 5.

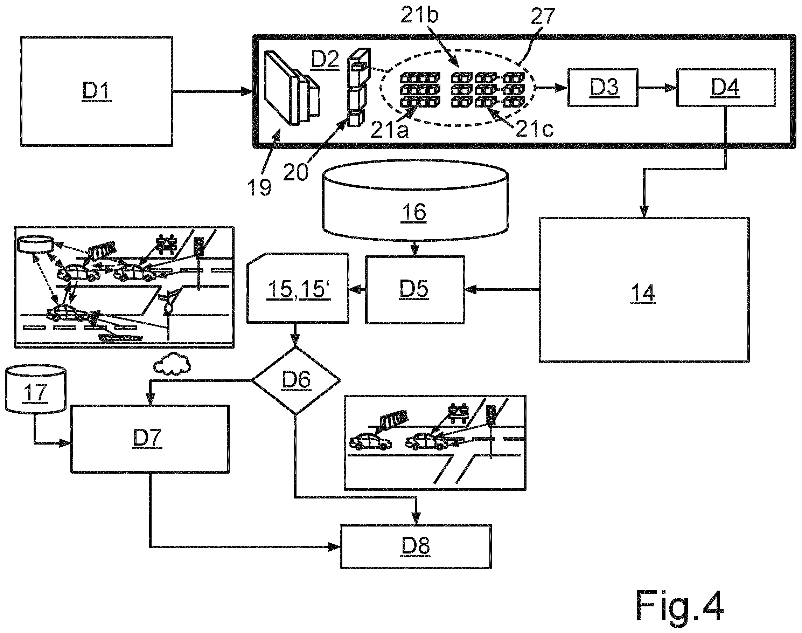

The computing unit 3 stores a trained artificial neural network 19 (see Fig. 4), which is in particular based on a CNN, for carrying out an object detection algorithm. The method for road safety assessment comprises a deployment phase represented by steps D1 to D5 in Fig. 2. Steps T1 to T8 in the flow diagram of Fig. 2 correspond to a training and validation phase for the neural network 19. The training and validation phase may be part of the method for road safety assessment or may be carried out prior to the method for road safety assessment.

In step D1, the camera 4 generates image data 7 representing the road segment 5 and provides it to the computing unit 3. In step D2, the computing unit 3 carries out the object detection algorithm by applying the neural network 19, which before that has been trained and validated, to the image data 7 in order to determine a set of bounding boxes 14 representing respective objects 6a, 6b in the environment of the camera 4. In addition to the bounding boxes 14, the computing unit 3 determines a corresponding object class for each of the objects 6a, 6b represented by the bounding boxes 14. Optional steps D3 and D4 are discussed below. In step D5, the computing unit 3, in particular a safety estimation engine of the computing unit 3, computes at least one safety indicator 15 for the road segment 5 depending on the bounding boxes 14 and/or the corresponding object classes. Optionally, the safety estimation engine may compute a safety score 15' depending on the at least one safety indicator.

In several implementations, the safety estimation engine may be implemented as a first-order logic, FOL, inference engine. In step D5, the FOL inference engine may obtain a set of predefined rules in FOL-format 16 from a knowledge base to compute the safety indicators 15.

Prior to step D5, the computing unit 3 may carry out optional step D4, during which a non-maximum suppression method is applied to filter the initial bounding boxes generated by the neural network 19 by filtering out duplicates, that is bounding boxes representing the same object, and the bounding boxes 14 correspond to the filtered bounding boxes.

The neural network 19 is, in particular, trained to predict bounding boxes 14 and object classes for oriented undirected objects. Therefore, each of the initial bounding boxes generated by the neural network 19 may be characterized by a set of six descriptors including two orientation descriptors. The descriptors may, in particular, contain two size descriptors, two location descriptors and the two orientation descriptors. The size descriptors may for example correspond to the length and width of the respective bounding box or to an offset in length and width of the respective bounding box with respect to one of a plurality of anchor boxes. The location descriptors may correspond to the two-dimensional coordinates of the center point of each bounding box or to a corresponding offset from the respective anchor box.

From the two orientation descriptors, an orientation angle θ of the bounding box, for example with respect to a horizontal line in the image data 7, may be uniquely derived, wherein θ lies within the interval [0°, 180°]. On the other hand, the two orientation descriptors are invariant under a rotation of the bounding box by 180°. For example, the orientation descriptors are given by sin(2θ) and cos(2θ).

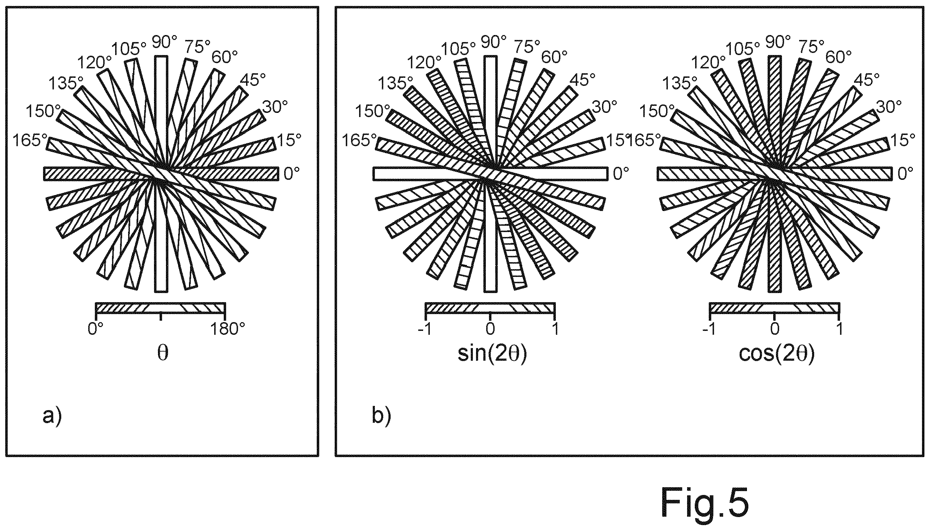

By choosing sin(2θ) and cos(2θ) for encoding the orientation of the bounding boxes, it is ensured that the respective continuity problem occurring for oriented but undirected bounding boxes when utilizing only θ for encoding the orientation is solved. Fig. 5 shows in panels a) and b) different possibilities for encoding the orientation of a bounding box, wherein the described encoding using sin(2θ) and cos(2θ) is represented for panel b) of Fig. 5.

A straight-forward approach is to directly predict θ within the range of 0 to 180°. Then, each corresponding oriented bounding box would have only five descriptors, corresponding to the center point coordinates, length and width of the bounding box and the orientation angle θ. As demonstrated in panel a) of Fig. 5, a sudden change of the encoding value occurs when considering objects with the orientation of 0° and slightly below 180°, for example 179°. Despite such objects would have a very similar orientation, the encoded value θ would be drastically different for both cases, while this is not happening for two objects having orientation angles of 0° and 1°, for example. While in both cases, the effective difference in orientation is the same, the differences in the encoded values are very different. Therefore, the method according to the improved concept does not use only the angle θ for encoding the orientation of a bounding box.

As demonstrated in panel b) of Fig. 5, using the first and the second orientation descriptors given by sin(2θ) and cos(2θ), respectively, solves the discontinuity problem. For example, sin(2θ) and cos(2θ) both have the same respective values orientations differing by 180°. Consequently, this orientation encoding is suitable for the purposes of object detection of oriented and undirected objects, as for the improved concept. By avoiding the discontinuity problem by using the two orientation descriptors, the accuracy for generating the bounding boxes 14 and the corresponding object classes by means of the neural network 19 is increased. Consequently, also the determined safety indicators 15 and/or the safety score 15' may be computed with higher accuracy or confidence.

The steps T1 to T8 for training and validating the neural network 19 may be carried out by the computing unit 3 or by an external training computing unit (not shown) or, in other words, offline. This may have the advantage that greater computational power and memory resources may be available offline.

In step T1, a large amount of training images is collected, for example, by means of the camera 4 or by other camera systems of further vehicles or also from alternative sources. In step T2, the training images are annotated or labeled. This means, for each of the training images, one or more bounding boxes and object classes are determined and stored to generate a corresponding set of annotated training data 8a. The annotation may be done according to conventional approaches, for example manually. In the same way as for the annotated training data 8a, also a set of annotated validation data 8b may be generated and stored.

In optional step T3, the training data 8a may be augmented in order to increase the overall amount of input to the neural network 19 during the training phase. In this way, overfitting of the neural network 19 during the training phase may be avoided. The augmentation may for example comprise the creation of modified copies of the individual images of the training dataset 8a, wherein each copy is amended or enriched according to data augmentation techniques. To this end, the objects in the corresponding image may be kept invariant, while noise may be introduced or the background may be distorted. For example, photometric transformations such as changing brightness, lightning conditions or applying additive white noise to the images may be applied for data augmentation. Furthermore, geometric transformation, like horizontal flipping or rotation may be applied.

During the annotation in step T2, the bounding boxes may be defined by their respective rotation angles θ. In this case, the annotated and augmented training data may be encoded in step T4 to implement the orientation encoding according to the orientation descriptors sin(2θ), cos(2θ) as described above. Furthermore, while the annotation in step T2 may be based on the location of the center points of the bounding boxes and the width and length of the bounding boxes to define them, respectively, a different encoding may be used for training the neural network 19. For example, the locations and sizes of the bounding boxes may be translated to corresponding offsets from a predefined set of anchor boxes. This may also be performed during the encoding step T4. Also the validation data 8b may be encoded in the same way in step T4.

In step T5, the untrained or partially trained neural network 19 is applied to the training data 8a, which may have been augmented and encoded as described, in order to predict corresponding bounding boxes and object classes. The same may be done for the encoded validation data 8b. Different approaches for adapting the neural network 19, in particular its weights and biases, depending on the generated output, may be applied. In particular, a loss function may be computed, and the adaption may be performed by means of back propagation.

For example, by comparing the output of the neural network 19 to the corresponding labels of the annotated data 8a, 8b, respective evaluation results 9, 11, for example, calculated as the respective mean average precision, MAP, may be computed. In step T6, hyperparameters 10 may be tuned depending on the evaluation results 9, 11. The hyperparameters may for example include a learning rate used for optimizing the neural network 19, a batch size, data augmentation parameters or optimizer parameters for an adaptive movement estimation, ADAM, optimizer. The tuned hyperparameters 10 may also be used for ADAM optimization and back propagation in step T7.

In step T8, stopping criteria may be checked depending on the evaluation results 9, 11. For example, an improving performance, for example, mean average precision, for the training data 8a in combination with a performance, for example, mean average precision, for the validation data 8b becoming worse, may indicate the onset of overfitting. Corresponding criteria may be formulated for stopping the training in such situations.

Optional steps R1 to R5 describe a validation phase for the safety estimation engine. In step R1, the validation data 8b may be used as input for the trained neural network 19 to determine respective bounding boxes and object classes. Step R2 corresponds to a decoding step as described with respect to step D3. Step R3 corresponds to a filtering step as described with respect to step D4. In step R4, the not validated or partially validated safety estimation engine is applied to the decoded and, in particular, filtered output of the neural network 19. Based on the evaluation results 12 obtained from step R4, hyperparameters for the safety estimation engine may be tuned in step R5 resulting in tuned rule hyperparameters 13, which may then be used to optimize the safety estimation engine.

In particular, the neural network 19 used during the deployment phase, in particular in step D2, corresponds to the neural network 19 trained during the training and validation phase. Furthermore, the safety estimation engine used in step D5 of the deployment phase corresponds, if applicable, to the safety estimation engine validated according to the steps R1 to R5, as described.

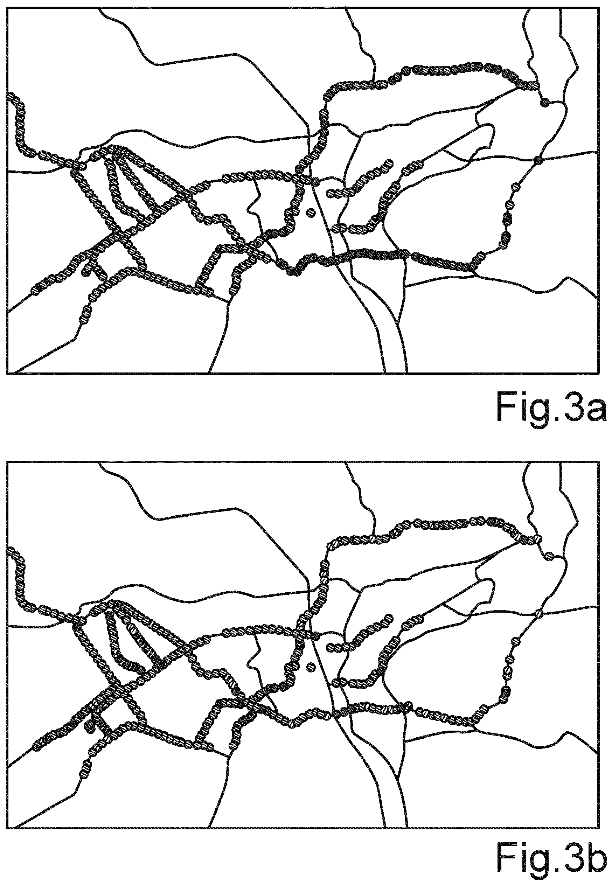

Fig. 3a and Fig. 3b show respective visual representations of safety indicators 15 as determined in step D5 by the computing unit 3. Fig. 3a and Fig. 3b show maps of a geographical region. In Fig. 3a, a corresponding indicator, whether or not a road separation is present, is visualized by circles with different shadings. In Fig. 3b, the traffic density is depicted accordingly by circles with different shadings.

Fig. 4 shows a flow diagram of a further exemplary implementation of a method according to the improved concept. The steps D1 to D5 correspond to the steps D1 to D5 of Fig. 2.

As a result of step D2, the neural network 19 provides one or more feature maps 20. Each feature map 20 comprises values for the corresponding descriptors 21 of the determined bounding boxes. The location and size descriptors 21a may correspond to offsets in the x- and y-coordinates as well as in the width and length of the corresponding bounding box from each of a set of predefined anchor boxes. The orientation descriptors 21b correspond to sin(2θ) and cos(2θ) of the respective bounding boxes. Furthermore, probabilities 21c may be generated by the neural network 19 representing the respective probabilities that the predicted object is classified as one of a predefined plurality of object classes.

In some implementations, more than one feature map 20, for example three feature maps 20, may be created by the neural network 19. The different feature maps 20 may have different sizes and origin from different stages of the neural network 19. The larger a respective feature map 20 is, the more accurate are its predictions for small objects, the smaller the feature map 20, the more accurate are its predictions with respect to large objects. In this way, it is achieved that large objects as well as small objects are detected or predicted with a good accuracy.

The size of the individual feature map 20 are given by the respective output layer tensor shape for the corresponding stage of the feature map 20. It may be given by S×S×A×(4+2+1+C), where SxS is the number of grid cells in the respective stage, A is the number of anchor boxes per cell, 4 corresponds to the number of location and size descriptors 21a, 2 corresponds to the number of orientation descriptors 21b, 1 to a respective confidence score and C refers to the number of considered object classes.

The road safety assessment system 2 may be operated in an online mode and in an offline mode. Step D6 distinguishes between online mode and offline mode. If the road safety assessment system 2 is operating in offline mode, the road safety assessment system 2 does not take into account additional information from further vehicles or infrastructure and may use the safety indicators 15 and/or safety score 15' of step D5 to enable or disable an automated driving mode or an advanced driver assistance function in step D8. If the road safety assessment system 2 is operating in online mode, the computing unit 3 may obtain in D7 further safety indicators and/or further safety scores from further vehicles or the infrastructures via V2V or V2I, respectively. Depending on the safety indicators 15 and/or the safety score 15', the additional safety indicators and/or the additional safety scores and, for example, depending on position information 17, such as GPS coordinates, the computing unit 3 may then decide to enable or disable the automated driving mode or the advanced driver assistance function in step D8.

According to the improved concept, as described in particular with respect to figures, automatic roadway safety assessment may be performed in a pervasive manner. It may harness the potential of artificial intelligence and computer vision to make the assessment more efficient and less costly. Roadway safety related features and, in some implementations, a safety score may be estimated automatically for example based on front camera data. Some implementations make use of an oriented object detection model, which solves an orientation discontinuity problem to improve the deep learning-based oriented object detection. A rule-based roadway safety estimation engine may be used to compute the safety indicators. The system may for example operate in two modes. In the offline mode, only data collected by one motor vehicle or its camera system, respectively, may be utilized. In the online mode, data coming from a further vehicle roaming the same geographical area may be aggregated, for example, in a remote server or in the vehicle itself in order to improve accuracy.

In various implementations, the most relevant object classes for safety relevant objects are used for the object detection. This may include, but is not limited to, traffic signs, lane markings, right and left barriers, light poles, right and left curbs, fences, buildings, billboards, pedestrians, cars, buses, motor cycles, heavy vehicles, public transportation and trees.

In some implementations, as a basis for the object detection, a one-stage object detector dividing images into grid cells may be used. For each grid cell it may produce a plurality of different prediction of different scales and sizes for the potential object centered at the respective grid cell. Each prediction may include a score representing the confidence of the object's existence in the corresponding cell. A set of anchor boxes defining the most common bounding boxes scales may be predefined, and the algorithm may predict the scale of sets from such anchor boxes.

Using two orientation descriptors, for example sin(2θ) and cos(2θ), a higher accuracy in detecting oriented undirected objects is achieved.

## Claims

1. Method for road safety assessment, the method comprising
- receiving image data (7) representing a road segment (5) by a computing unit (3);
- determining a set of bounding boxes (14) by the computing unit (3) based on the image data (7), each bounding box (14) representing an object (6a, 6b), wherein for each of the bounding boxes (14) a set of two orientation descriptors (21b) specifying a two-dimensional orientation of the respective bounding box (14) is determined;
- determining by the computing unit (3) a respective object class for each of the objects (6a, 6b) represented by the set of bounding boxes (14);
- computing at least one safety indicator (15) for the road segment (5) by the computing unit (3) depending on the determined object classes.

2. Method according to claim 1,
**characterized in that**
the set of orientation descriptors (21b) is invariant with respect to a rotation of the respective bounding box (14) by a rotation angle of 180° around a center of the respective bounding box.

3. Method according to one of the preceding claims,
**characterized in that**
for each of the bounding boxes (14), a first orientation descriptor given by sin(2θ) is determined by the computing unit (3), wherein θ corresponds to an orientation angle of the respective bounding box (14) with respect to a predefined reference line.

4. Method according to claim 3,
**characterized in that**
for each of the bounding boxes (14), a second orientation descriptor given by cos(2θ) is determined by the computing unit (3).

5. Method according to one of the preceding claims,
**characterized in that**
the at least one safety indicator (15) is computed depending on the determined bounding boxes (14) and/or depending on the determined sets of orientation descriptors (21b).

6. Method according to one of the preceding claims,
**characterized in that**
a safety score (15') representing an overall risk for a road accident on the road segment (5) is computed by the computing unit (3) depending on the at least one safety indicator (15).

7. Method according to one of the preceding claims,
**characterized in that**
- a route for a motor vehicle (1) is planned by the computing unit (3) depending on the at least one safety indicator (15); or
- an autonomous driving mode of the motor vehicle (1) is enabled or disabled by the computing unit (3) depending on the at least one safety indicator (15); or
- a driver assistance function of the motor vehicle (1) is enabled or disabled by the computing unit (3) depending on the at least one safety indicator (15).

8. Method according to one of the preceding claims,
**characterized in that**
an object (6a, 6b) detection algorithm based on a trained artificial neural network (19) is carried out by the computing unit (3) using the image data (7) as an input to the neural network (19) for determining the set of bounding boxes (14) and the respective object classes.

9. Method according to claim 8,
**characterized in that**
a feature map (20) is generated by the computing unit (3) as an output of the neural network (19), wherein the feature map (20) comprises the respective sets of orientation descriptors (21b) for at least a fraction of the bounding boxes (14).

10. Method according to one of the preceding claims,
**characterized in that**
the at least one safety indicator (15) is computed by a first-order logic inference engine implemented on the computing unit (3).

11. Method according to one of the preceding claims,
**characterized in that**
the at least one safety indicator (15) comprises one or more of the following:
- an indicator characterizing a traffic density on the road segment (5);
- an indicator characterizing an environment of the road segment (5);
- an indicator characterizing the presence of a road separation on the road segment (5);
- an indicator characterizing the presence of road markings on the road segment (5);
- an indicator characterizing the presence of traffic signs on the road segment (5);
- an indicator characterizing a lighting infrastructure on the road segment (5);
- an indicator characterizing the presence of obstacles on the road segment (5);
- an indicator characterizing the presence of a predefined type of vehicles on the road segment (5).

12. Road safety assessment system for a motor vehicle (1), the road safety assessment system (2) comprising a computing unit (3), which is configured to
- receive image data (7) representing a road segment (5) in an environment of the motor vehicle (1) from an environmental sensor system of the motor vehicle (1);
- determine a set of bounding boxes (14) based on the image data (7), each bounding box (14) representing an object (6a, 6b), wherein the computing unit (3) is configured to determine for each of the bounding boxes (14) a set of two orientation descriptors (21b) specifying a two-dimensional orientation of the respective bounding box (14);
- determine a respective object class for each of the objects (6a, 6b) represented by the set of bounding boxes (14);
- compute at least one safety indicator (15) for the road segment (5) depending on the determined object classes.

13. Road safety assessment system according to claim 12,
**characterized in that**
the road safety assessment system (2) comprises the environmental sensor system (4), which is configured to generate the image data (7).

14. Motor vehicle comprising a road safety assessment system (2) according to one of claims 12 or 13.

15. Computer program product comprising instructions, which, when executed by a computer system, cause the computer system to carry out a method according to one of claims 1 to 11.
